# NEUE EUROPÄISCHE PATENTSCHRIFT

(11) **EP 0 920 480 B2**
(45) Veröffentlichungstag und Bekanntmachung des Hinweises auf die Entscheidung über den Einspruch: **25.10.2006**
(45) Hinweis auf die Patenterteilung: 23.07.2003
(21) Anmeldenummer: 97940072.8
(22) Anmeldetag: 13.08.1997
(51) Int. Cl.: C09D 5/44, C08F 283/10, C09D 151/08

(54) **DISPERSION ZUR HERSTELLUNG EINES ELEKTROPHORETISCH ABSCHEIDBAREN TAUCHLACKES**
DISPERSION PRODUCT FOR PRODUCING AN ELECTROPHORETICALLY PRECIPITABLE DIPPING VARNISH
PRODUIT DE DISPERSION POUR LA FABRICATION D'UN VERNIS A IMMERSION PRECIPITABLE PAR ELECTROPHORESE

(30) Priorität: 22.08.1996 DE 19633769
(43) Veröffentlichungstag der Anmeldung: 09.06.1999
(73) Patentinhaber: BASF Coatings Aktiengesellschaft, 48165 Münster (DE)
(72) Erfinder: BREMSER, Wolfgang, D-48165 Münster (DE); STRICKMAN, Frank, D-48565 Steinfurt (DE); OTT, Günther, D-48167 Münster (DE); GROSSE-BRINKHAUS, Karl-Heinz, D-48301 Nottuln (DE)
(86) Internationale Anmeldenummer: PCT/EP1997/004401
(87) Internationale Veröffentlichungsnummer: WO 1998/007794

(56) Entgegenhaltungen:
- EP-A- 0 067 312
- EP-A- 0 622 389
- WO-A-91/09917
- WO-A-93/18099
- GB-A- 2 091 737
- US-A- 4 608 314

## Beschreibung

Die vorliegende Erfindung betrifft wäßrige Dispersionen, die erhältlich sind, indem ein ethylenisch ungesättigtes Monomer oder eine Mischung aus ethylenisch ungesättigten Monomeren in einer wäßrigen Lösung eines wenigstens teilweise protonierten Epoxid-Aminaddukts polymerisiert wird, sowie deren Verwendung zur Herstellung von elektrophoretisch abscheidbaren Tauchlacken. - Elektrophoretisch abscheidbare Tauchlacke sind Überzugsmittel, mit welchen im Wege der (meist kationischen) Elektrotauchlackierung Lackschichten auf einem elektrisch leitenden Substrat hergestellt werden können. Bei der Elektrotauchlackierung wird der zu lackierende Gegenstand in ein den Tauchlack enthaltendes Bad eingetaucht, wobei der Gegenstand als Anode oder Kathode geschaltet und somit ein elektrisches Feld im Bad erzeugt wird. Üblicherweise wird mit Spannungen von 50 =500V gearbeitet. Unter Einwirkung des Feldes wird der Tauchlack auf dem Gegenstand abgeschieden. Es verstehtsich, daß hierzu der Tauchlack eine gewisse Leitfähigkeit aufweisen muß, d.h. daß die die Lackschicht bildenden Substanzen im Feld wandern müssen. Die abgeschiedene Lackmenge ist dabei der zugeführten Strommenge in erster Näherung direkt proportional. Die Stromzufuhr erfolgt üblicherweise solange, bis eine vorgegebene Schichtdicke der Lackschicht erreicht ist. Die Elektrotauchlackierung wird insbesondere zur Grundierung von Kraftfahrzeugkarosseriebauteilen verwendet, wobei in der Regel kathodisch gearbeitetwird. Im Rahmen dieser Beschreibung wird der Begriff Lösung in allgemeinster Bedeutung verwendet, d.h., daß damit neben den Lösungen im üblichen Sinne auch Dispersionen angesprochen sein sollen.

In einer Dispersion des eingangs genannten Aufbaus sind aus dem ethylenisch ungesättigen Monomer bzw. aus der Mischung aus ethylenisch ungesättigten Monomeren Polymere gebildet, die letztendlich im Elektrotauchlack zu dessen Feststoffgehalt beitragen. Die Polymere entstehen beispielsweise durch Emulsionspolymerisation. Der Begriff Emulsionspolymerisation bezeichnet ein Spezialverfahren der Polymerisation, bei dem an sich wasserunlösliche Monomere mit Hilfe von Emulgatoren in Wasser emulgiert und unter Verwendung von Initiatoren polymerisiert werden. Die Emulsionspolymerisation an sich ist gut bekannt.

Da es sich um eine wäßrige Dispersion handelt, ist deren Einsatz auf die Technologie der wäßrigen Lacke gerichtet. Bei wäßrigen Lacken enthält der Lack Wasser als "Lösungsmittel".

Eine Dispersion der eingangs genannten Art ist aus der Literaturstelle WO 93/18099 (PCT/US93/01512) bekannt. Gemäß diesem Stand derTechnik werden ethylenisch ungesättigte Monomere, und zwar Diene, beispielsweise Butadien, in wäßriger Phase und in Anwesenheit eines kationischen, oberflächenaktiven Polymers sowie in Anwesenheit von Reglerstoffen für die Kettenlänge polymerisiert. Als kationische, oberflächenaktive Polymere können grundsätzlich auch protonisierte Epoxid-Aminaddukte eingesetzt werden. Als Initiatoren werden kationische Verbindungen eingesetzt. Im Ergebnis werden aus den ethylenisch ungesättigten Monomeren Polymere erhalten, deren massenmittleres Molekulargewicht 50000 und weniger beträgt. Das diesem Stand der Technik zugrundeliegende technische Problem besteht darin, die sogenannte Kraterbildung bei der Lackierung zu reduzieren. Die zur Verminderung der Kraterbildung genutzten Effekte bringen jedoch Nachteile in anderer Hinsicht mit sich, nämlich eine erheblich verschlechterte Haftung subsequent aufgetragener Überzugsschichten, insbesondere wenn es sich um Überzugsschichten auf polarer Basis handelt, wie beispielsweise Füller. Dies stört aus offensichtlichen Gründen. Die Begrenzung auf maximal 40% Feststoffgehalt vermeidet eine zu starke Agglomeratbildung und/oder eine zu hohe Viskosität der Dispersion, diese Dispersionsviskosität steht aber nicht im Zusammenhang mit der Viskosität des späteren Lackfilms während des Einbrennprozesses.

Für die Viskosität des Lackfilms während des Einbrennprozesses stellen sich die Verhältnisse folgendermaßen dar:
Der Lackfilm setzt sich im allgemeinen aus drei Komponenten zusammen, dem Harz-Anteil, der aus der Bindemitteldispersion kommt, dem Reibharzanteil aus der Pigmentpaste und den Pigmenten. Hierbei stellen die Harzanteile die niederviskoseren und die Pigmente die hochviskosen (festen) Anteile dar. Bei ausschließlicher Verwendung von Bindemitteln wird somit ein niederviskoser Lackfilm erzeugt, der deutliche Kantenflucht zeigt. Erst durch Einsatz von Pigmentpaste wird die Viskosität auf das gewünschte Niveau eingeteilt. Hierwirken die Pigmente einfach als "Felsbrocken" in einer Schmelze. Dies hat nichts mit der Viskosität der wäßrigen Ausgangspigmentpaste zu tun, sondern hängt ausschließlich von der Volumenkonzentration und den spezifischen Eigenschaften der Pigmentteilchen ab.

Aufgrund der Pigmentpartikel wird demgemäß die Dichte des fertigen Überzuges in störender Weise heraufgesetzt. Eine hohe Dichte stört, da die Abscheidung des Tauchlackes nach Maßgabe der zu erzielenden Schichtdicke gesteuert wird und bei gleicher Schichtdicke eine Schicht hoher Dichte zu einem größeren Verbrauch an Tauchlack und zu höherem Gewicht des beschichteten Gegenstandes führt.

In der DE 4412187 A1 werden Füllstoffe aus Polyacrylnitril, die mittels Emulsionspolymerisation hergestellt und direkt als Pastenersatz eingesetzt werden. Styrol wird dabei allenfalls in untergeordneter Menge zugesetzt. Der erforderliche Einsatz von Acrylnitril ist jedoch aus toxikologischen Gründen unerwünscht und im übrigen teuer.

Demgegenüber liegt der Erfindung das technische Problem zugrunde, eine wäßrige Dispersion bereitzustellen, die unter Verwendung einer möglichst großen Menge Styrol herstellbar und folglich die Nachteile des Einsatzes von Polyacrylnitril vermeidet.

Zur Lösung dieses Problems lehrt die Erfindung wäßrige Dispersionen, die erhältlich sind, indem styrol als ein ethylenisch ungesättigtes Monomer oder eine Mischung aus ethylenisch ungesättigten Monomeren, die mindestens 70 gew.% Styrol enthält, in einer wäßrigen Lösung eines wenigstens teilweise protonierten Epoxid-Aminaddukts polymerisiert wird, wobei das Epoxid-Aminaddukt erhältlich ist, indem (A) ein Glydicylether eines Polyphenols, der im statistischen Mittel mindestens eine Epoxidgruppe im Molekül enthält, oder ein Gemisch aus solchen Glycidylethern, (B) ein Polygycidylether eines Polyols, der im statistischen Mittel mehr als 1,0 Epoxidgruppen im Molekül enthält, oder ein Gemisch aus solchen Polyglycidylethern und (C) eine Verbindung, die eine primäre Aminogruppe im Molekül enthält, oder ein Gemisch aus solchen Verbindungen zu dem Epoxid-Aminaddukt umgesetzt werden, wobei die Komponenten (A) und (B) in einem Äquivalentverhältnis von 1,0:0,5 bis 1,0: 8,0 eingesetzt werden und auf ein Äquivalent Epoxidgruppen aus (A) und (B) 0,3 bis 0,7 Mol der Komponente (C) eingesetzt werden. Ein Epoxid-Aminaddukt des vorstehend genannten Aufbaus ist als solches bekannt aus der Literaturstelle EP 0505445 B1. -Ethylenisch ungesättigte Monomere sind beispielsweise Substanzen der Gruppe "aliphatische oder aromatische Ethylenderivate, Alkyl-Acrylsäureester, Alkyl-Methacrylsäureester, Hydroxyalkyl-Acrylsäureester, Hydroxyalkyl-Methacrylsäureester, halogenierte Formen der genannten Monomere" oder Mischungen daraus, vorzugsweise dienfreie Verbindungen, insbesondere Styrol. Styrol ist einerseits kostengünstig verfügbar, andererseits lassen sich durch seinen Einsatz Dispersionen mit hervorragenden Eigenschaften herstellen. Beispiele für geeignete Acrylsäureester der allgemeinen Formel H₂C=CH-COOR sind: Methyl-, Ethyl-, N-Butyl-und 1-Butyl-Acrylsäureester. Beispiele für Hydroxyalkly-Acrylsäureester sind Hydroxyethyl- und Hydroxypropyl-Acrylsäureester. Die bevorzugten Methacrylsäureester der allgemeinen Formel 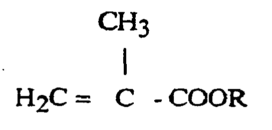 sind: Methyl-, Butyl-, Hexyl- und Octyl-Methacrylat. Beispiele für Hydroxy-Alklymethacrylate sind Hydroxyethyl- und Hydoxypropyl-Methacrylate.

Überraschenderweise werden aufgrund der Polymerisation der Monomere in Gegenwart des angegebenen, speziellen Epoxid-Aminaddukts folgende Vorteile erreicht. Zunächst ist nicht nur die Dispersion selbst sehr stabil, sondern auch mit der erfindungsgemäßen Dispersion hergestellte Tauchlacke. Dies gilt auch dann, wenn vergleichsweise große Mengen einer erfindungsgemäßen Dispersion zum Elektrotauchlack zugegeben werden. Weiterhin wird eine gute Haftung eines damit hergestellten Lackes einerseits zum Substrat und andererseits zu überlackierten Lackschichten erreicht. Die guten Haftungseigenschaften beruhen möglicherweise auf einer Ankoppelung der polymerisierten Monomere an das erfindungsgemäß eingesetzte Epoxid-Aminaddukt und/oder das Dispersionsbindemittel, weshalb diese während des Einbrennvorganges in dem polaren Bindemittel des Elektrotauchlackes eingebunden bleiben. Vorteilhafterweise sind Verbesserungen hinsichtlich der mechanisch-technologischen Eigenschaften des Lackfilms (Haftfähigkeit, Eignung als Haftgrund, Härte, Biegeelastiziät, Steinschlagfestigkeit, Korrosionsschutz, etc.) durch Einsatz allein der erfindungsgemäßen Dispersion erreichbar. Zumindest jedoch werden praktisch keine Beeinträchtigungen gegenüber Elektrotauchlacken mit "klassischen" Pigmentpasten beobachtet. Schließlich tritt überraschenderweise sogar eine Verbesserung des Korrosionschutzes für das Substrat ein. Von besonderer Bedeutung in wirtschaftlicher Hinsicht ist auch, daß dienfrei gearbeitet werden kann. Der Ausdruck dienfrei meint, daß praktisch keine Diene in den Monomeren enthalten sind. Dies erlaubt es im wesentlichen, mit dem sehr kostengünstig einsetzbaren Styrol zu arbeiten, ohne daß teure Zusätze benötigt werden. Eine erfindungsgemäße Dispersion ist genauso einsetzbar und dem Bindemittel des Elektrotauchlackes zudosierbar, wie eine herkömmliche Pigmentpaste mit anorganischen Pigmentpartikeln, obwohl auf anorganische Pigmentpartikel völlig verzichtet werden kann, wenn Farbeffekte nicht gewünscht sind. Hiermit ist gemeint, daß mit einer erfindungsgemäßen Dispersion die Viskosität des Tauchlackes bzw. der im Bad abgeschiedenen Überzugsschicht nach Maßgabe einer optimalen Beschichtung abgestimmt werden kann. Dies führt schließlich zu einem verbesserten Kantenschutz auf dem beschichteten Gegenstand, da während des Einbrennens die Beschichtung nicht so leicht von den Kanten wegfließen kann. Insofern ist eine erfindungsgemäße Dispersion ein praktisch gleichwertiger (Teil-) Ersatz für "klassische" Pigmentpasten mit anorganischen Pigmentpartikeln, wobei jedoch demgegenüber zumindest eine reduzierte Dichte des fertigen Überzuges von 1,19 g/cm³ und weniger sowie eine verbesserte Korrosionsbeständigkeit erreicht wird.

Die vorstehend beschriebenen Effekte bzw. Vorteile sind umso überraschender, als allgemein festzustellen ist, daß eine Polymerisation des vergleichsweise preiswerten Styrols als ethylenisch ungesättiges Monomer in Gegenwart von neutralisierten Elektrotauchlackbindemitteln und/oder neutralisierten Pastenharzen bei Einsatz größerer Mengen Styrol nach bisherigen Erfahrungen regelmäßig zu Problemen beim Endprodukt führte. Einerseits war die Stabilität des erhaltenen Lackes verschlechtert. Andererseits lieferten bekannte polystyrolhaltige Lacke Lackfilme mit verschlechterten mechanisch-technologischen Eigenschaften und/oder verschlechterter Haftung zum Substrat und/oder zu überlackierten Lackschichten. Mit anderen Worten ausgedrückt erschien der Einsatz größerer Mengen Polystyrol bisher als sehr unzweckmäßig.

Aufgrund der besonderen Bedeutung des im Rahmen der Erfindung eingesetzten Epoxid-Aminaddukts soll auf dieses folgend näher eingegangen werden. Das aus (A), (B) und (C) erhaltene Epoxid-Aminaddukt sollte vorzugsweise epoxidgruppenfrei sein. Für den Fall, daß es noch Epoxidgruppen enthält, ist es zweckmäßig, die verbliebenen Epoxidgruppen mit Verbindungen wie z. B. Monophenolen und Aminen, insbesonderesekundären Aminen umzusetzen (Beispiele für Verbindungen, die zur Umsetzung mit noch verbliebenen Epoxidgruppen geeignet sind, sind in der EP-A-253404 auf der Seite 8 von Zeile 28 bis Zeile 37 und Seite 9 Zeile 16 bis Seite 10 Zeile 15 aufgezählt).

Bevorzugte Epoxid-Aminaddukte werden erhalten, wenn die Komponenten (A) und (B) in einem Äquivalentverhältnis von 1,0:1,0 bis 1,0:2,0 eingesetzt werden, und wenn die Komponente (C) in einer solchen Menge eingesetzt wird, daß auf ein Äquivalent Epoxidgruppen aus (A) und (B) 0,4 bis 0,6 Mol der Komponente (C) kommen. Das zahlenmittlere Molekulargewicht der erfindungsgemäßen Reibharze sollte zwischen 1000 und 100000, vorzugsweise zwischen 3000 und 15000 liegen. Die Komponente (C) kann nacheinander mit (A) und (B) oder - was bevorzugt ist - mit einem Gemisch aus (A) und (B) umgesetzt werden. Die Umsetzung der Komponenten (A), (B) und (C) kann schon bei Raumtemperatur ablaufen. Zur Erreichung wirtschaftlicher Umsatzzeiten ist es zweckmäßig, die Reaktionstemperatur zu erhöhen, z. B. auf 60 bis 130 °C. Die Umsetzung der Komponenten (A), (B) und (C) wird vorzugsweise in einem organischen Lösemittel wie z.B. Ethylenglycolmonobutylether oder Propylenglycolmonobutyleter durchgeführt. Anschließend wird mit einer Säure, wie z. B. Essigsäure oder Milchsäure, neutralisiert und in eine wäßrige Dispersion oder Lösung überführt. Die so erhaltene Dispersion bzw. Lösung kann dann nach allgemein gut bekannten Methoden weiterverarbeitet werden. Es ist auch möglich, das aus (A), (B) und (C) erhaltene, in einem organischen Lösemittel gelöste Reaktionsprodukt mit Pigmenten und ggf. Füllstoffen zu vermischen und unter Zusatz von Säure und ggf. Wasser zu einer Pigmente enthaltenden Dispersion weiterzuverarbeiten. Es können selbstverständlich auch Mischungen der erfindungsgemäß verwendeten Epoxid-Aminaddukte eingesetzt werden.

Als Komponente (A) kann im Prinzip jeder Glycidylether eines Polyphenols, der im statistischen Mittel mindestens eine Epoxidgruppe im Molekül enthält, oder ein Gemisch aus solchen Glycidylethern eingesetzt werden. Als Komponente (A) können beispielsweise Glycidylether der auf Seite 4 der EP-A-253404 zu findenden allgemeinen Strukturformeln (I) und (II) eingesetzt werden. Als Komponente (A) werden vorzugsweise ggf. mit der Komponente (b) (vgl. unten) modifizierte Bisphenol-A-diglycidylether mit einem Epoxidäquivalentgewicht von 180 bis 3000, vorzugsweise 180 bis 1000 eingesetzt. Als Komponente (A) werden besonders bevorzugt Gemische von Glycidylethern eingesetzt, die erhältlich sind, indem in Gegenwart eines Katalysators, der die Reaktion zwischen phenolischen Hydroxylgruppen und Epoxidgruppen katalysiert, aus (a) einem Diglycidylether eines Polyphenols, vorzugsweise einem Diglycidylether von Bisphenol-A mit einem zahlenmittleren Molekulargewicht von 260 bis 450, ,vorzugsweise von 370 bis 380 oder einem Gemisch aus solchen Diglycidylethern, (b) einem ggf. substituiertem Monophenol, vorzugsweise einem Alkylphenol mit 1 bis 18, vorzugsweise 4 bis 12 Kohlenstoffatomen im Alkylrest, oder eine Mischung aus solchen Monophenolen und (c) einem Diphenol, vorzugsweise Bisphenol A und/oder einem Katalysator, der die Reaktion zwischen aliphatischen Hydroxylgruppen und Epoxidgruppen katalysiert, Glycidylether hergestellt werden, die ein zahlenmittleres Molekulargewicht von 980 bis 4000, vorzugsweise 980 bis 2000 aufweisen, und die im statistischen Mittel pro Molekül 1,0 bis 3,0, vorzugsweise 1,2 bis 1,6 Epoxidgruppen und 0,25 bis 1,3, vorzugsweise 0,4 bis 0,9 von der Komponente (b) stammende Phenylethergruppen enthalten. Die Herstellung der besonders bevorzugt eingesetzten (A) Komponente erfolgt vorzugsweise in organischen Lösemitteln wie z.B. Xylol, Ethylenglycolmonobutylether oder Propylenglycolmonobutylether. Die Reaktionstemperaturen liegen zweckmäßigerweise bei 100-180 °C. Katalysatoren, die die Reaktion zwischen phenolischen Hydroxylgruppen und Epoxidgruppen katalysieren, sind dem Fachmann bekannt. Als Beispiele werden genannt: Triphenylphosphin und die auf Seite 9 in den Zeilen 6 bis 9 der EP-A-253404 genannten Katalysatoren. Die Komponente (c) soll dafür sorgen, daß aus der Komponente (a) höhermolekulare Glycidylether aufgebaut werden. Dieser Aufbau kann durch Kettenverlängerung mit einem Diphenol, vorzugsweise mit Bisphenol A erreicht werden. Der Aufbau kann aber auch durch Reaktion von in der Komponente (a) bzw. im Umsetzungsprodukt aus (a) und (b) enthaltenen aliphatischen Hydroxylgruppen mit Epoxidgruppen erfolgen. Um diese Reaktion gezielt zum Aufbau der gewünschten Glycidylether ausnutzen zu können, müssen Katalysatoren (z.B. tertiäre Amine) eingesetztwerden, die die Reaktion zwischen aliphatischen Hydroxylgruppen und Epoxidgruppen katalysieren. Durch den Einsatz von Diphenol und einem Katalysator gemäß (c) ist es möglich, beide Aufbaureaktionen - die Kettenverlängerung über das Diphenol und die Additionsreaktion zwischen aliphatischen Hydroxylgruppen und Epoxidgruppen - zu nutzen. Die Umsetzung mit der Komponente (b) soll die bevorzugten Glycidylether modifizieren und zur Bildung von aliphatischen Hydroxylgruppen führen, die benötigt werden, wenn Aufbaureaktionen über Additionsreaktionen von aliphatischen Hydroxylgruppen an Epoxidgruppen ablaufen sollen. Durch die Angabe des zahlenmittleren Molekulargewichtes der herzustellenden besonders bevorzugten Komponente (A) und die Angaben über die in der Komponente (A) enthaltenen Epoxid- und von der Komponente (b) stammenden Phenylethergruppen ist es dem Fachmann problemlos möglich, die einzusetzenden Mengen an (a), (b) und (c) zu errechnen. Wenn über die Reaktion von aliphatischen Hydroxylgruppen und Epoxidgruppen ablaufende Aufbaureaktionen eingesetzt werden, muß die Aufbaureaktion nach Erreichen des vom Fachmann aus dem anzustrebenden zahlenmittleren Molekulargewicht und dem anzustrebenden Epoxidgruppengehalt errechenbaren Epoxidäquivalentgewichts abgebrochen werden. Dies geschieht zweckmäßigerweise durch Temperaturerniedrigung und Verdünnen der Reaktionsmischung.

Als Komponente (B) kann im Prinzip jeder Polyglycidylether eines Polyols, der im statistischen Mittel mehr als 1,0 Epoxidgruppen im Molekül enthält, oder ein Gemisch aus solchen Polyglycidylethern eingesetzt werden. Als Komponente (B) können beispielsweise die Polyglycidylether eingesetzt werden, die in der EP-A-253404 ab Zeile 42 der Seite 4 bis Zeile 13 der Seite 8 beschrieben sind. Als Komponente (B) werden vorzugsweise Polyglycidylether von Polyetherpolyolen, besonders bevorzugt Diglycidylether von Polyetherdiolen mit zahlenmittleren Molekulargewichten von 300 bis 3000,-vorzugsweise 400 bis 1200 eingesetzt. Als Beispiele für besonders bevorzugte Polyglycidylether werden Diglycidylether von Poly(ethylenglycol), Poly(propylenglycol), Poly(ethylenglycolpropylenglycol) und Poly(1,4 butandiol) genannt, wobei die zahlenmittleren Molekulargewichte der Diglycidylether zwischen 300 bis 3000, vorzugsweise zwischen 400 bis 1200 liegen.

Als Komponente (C) wird eine Verbindung eingesetzt, die eine primäre Aminogruppe im Molekül enthält oder ein Gemisch aus solchen Verbindungen. Die Komponente (C) darf nur eine primäre Aminogruppe im Molekül enthalten. Die Komponente (C) kann neben der primären Aminogruppe noch weitere funktionelle Gruppen wie z.B. tertiäre Aminogruppen und Hydroxylgruppen enthalten. Die Komponente (C) wird unter Bildung von tertiären Aminogruppen in die erfindungsgemäßen Epoxid-Aminaddukte eingebaut. Eine primäre Aminogruppe reagiert dabei mit zwei Epoxidgruppen und verknüpft somit kettenverlängernd zwei Moleküle der Komponenten (A) und/oder (B). Ein Teil der Komponente (C) kann auch mit endständigen Epoxidgruppen unter Bildung von sekundären Aminogruppen reagieren. Als Komponente (C) kann im Prinzip jede Verbindung eingesetzt werden, die eine und nur eine primäre Aminogruppe im Molekül enthält. Als Beispiele werden Verbindungen der allgemeinen Formel H₂N-CR₁R₂-R₃-O(CHR₄-CHR₅-O)ₙR₆ genannt: In dieser Formel stehen R₁ und R₂ für Wasserstoff, Alkyl- oder -CH-OH Gruppen, R₃ steht für einen linearen oder verzweigten Alkylenrest, insbesondere für einen Alkylenrest mit 1 bis 3 Kohlenstoffalornen, R4 und R5 stehen für Wasserstoff oder Alkylreste mit 1 bis 4 Kohlenstoffatomen, R₆ steht für Wasserstoff, einen Alkyl-, Cycloalkyloder Phenylrest, vorzugsweise für einen Alkylrest mit 1 bis 6 Kohlenstoffatomen und n = 0-5. Als Beispiele für einsetzbare Verbindungen diesen, Typs werden genannt: Ethanolamin, Propanolamin, Butanolamin, 2-Amino-2-methylpropanol-1 (H₂N-C(CH₃)₂-CH₂OH), 2 Amino-2-ethylpropanol-1 und ethoxyliertes und/oder proporyliertes Ethanolamin oder Propanolamin, wie z.B. 2-2'Aminoethoxyethanol (H₂N-CH₂-CH₂-O-CH₂-CH₂-OH) und Diethylenglykolmono(3-aminoproyl)- ether (H₂N-(CH₂)₃-O-CH₂-CH₂-O-CH₂-CH₂-OH). Als Komponente (C) können auch Verbindungen eingesetzt werden, die eine primäre und eine tertiäre Aminogruppe im Molekül enthalten. Als Beispiele werden genannt: N,N Dimethylaminopropylamin, N,N Diethylaminoethylamin und dergleichen. Als Komponente (C) können auch primäre Alkylamine wie z.B. Hexylamin eingesetzt werden. Auch ggf. substituiertes Anilin kann als Komponente (C) eingesetzt werden. Als Komponente (C) werden vorzugsweise Hexylamin und N,N Dimethylaminopropylamin sowie 2-2'Aminoethoxyethanol eingesetzt.

Eine bevorzugte Ausführungsform der Erfindung ist dadurch gekennzeichnet, daß die Dispersionen erhältlich sind, indem das ethylenisch ungesättigte Monomer bzw. die Mischung aus ethylenisch ungesättigten Monomeren und das wenigstens teilweise protonierte Epoxid-Aminaddukt in einem Gewichtsverhältnis von 9,0:1,0 bis 0,1:1,0, vorzugsweise von 5,0:1,0 bis 1,0:1,0, besonders bevorzugt von 2,5:1,0 bis 3,5:1,0, eingesetzt werden.

Im einzelnen kann als ethylenisch ungesättigtes Monomer allein Styrol eingesetzt werden. Alternativ dazu kann als Mischung aus ethylenisch ungesättigten Monomeren eine Mischung aus Styrol und mindestens einem weiteren, mit Styrol copolymerisierbaren ungesättigten Monomer eingesetzt werden. In letzterem Fall sollte die Mischung aus ethylenisch ungesättigten Monomeren mindestens 70 Gew.-%, vorzugsweise mindestens 80 Gew.-%, besonders bevorzugt mindestens 90 Gew.-%, Styrol enthalten.

In Weiterbildung der Erfindung kann das ethylenisch ungesättigte Monomer oder die Mischung aus ethylenisch ungesättigten Monomeren unter Verwendung eines wasserunlöslichen Initiators oder einer Mischung aus wasserunlöslichen Initiatoren radikalisch polymerisiert sein. Hierbei hat es sich als sehr zweckmäßig erwiesen, den wasserunlöslichen Initiator bzw. die Mischung aus wasserunlöslichen Initiatoren in einer Menge von 0,1 bis 10,0 Gew.-%, vorzugsweise von 0,5 bis 5,0 Gew.-%, besonders bevorzugt von 0,3 bis 3,0 Gew.-%, bezogen auf die Menge an eingesetztem ethylenisch ungesättigten Monomer bzw. auf die Menge an eingesetzter Mischung aus ethylenisch ungesättigten Monomeren, einzusetzen. Als Initiatoren kommen alle üblichen Initiatoren für Radikalkettenpolymerisation in Frage. Hierzu gehören insbesondere Azo-Verbindungen, Peroxide, Hydroperoxide und Perester, ferner geeignete Redox-Initiatoren. Besonders bevorzugt ist der Einsatz von Azoisovaleronitril als Initiator.

Eine bevorzugte Weiterbildung der Erfindung ist dadurch gekennzeichnet, daß die wäßrigen Dispersionen erhältlich sind, indem mindestens 50 Gew.-%, vorzugsweise mindestens 75 Gew.-%, besonders bevorzugt 100 Gew.-%, der insgesamt eingesetzten Menge an Initiator vorgelegt werden und die Zugabe des ethylenisch ungesättigten Monomeren bzw. die Zugabe der Mischung aus ethylenisch ungesättigter Monomeren innerhalb von höchstens 3 Stunden, bevorzugt innerhalb von höchstens 2 Stunden, besonders bevorzugt innerhalb von höchstens einer Stunde, erfolgt.

Gegenstand der Erfindung ist auch ein Verfahren zur Herstellung wäßriger Dispersionen gemäß Anspruch 7, wobei das ethylenisch ungesättigte Monomer oder die Mischung aus ethylenisch ungesättigten Monomeren in der wäßrigen Lösung des wenigstens teilweise protonierten Epoxid-Aminaddukts entsprechend der Ansprüche 1 bis 6 polymerisiert wird.

Die Erfindung betrifft schließlich auch wäßrige Lacke, die eine wäßrige Dispersion nach einem der Ansprüche 1 bis 6 enthalten, ein Verfahren zum Beschichten elektrisch leitfähiger Substrate, wobei ein erfindungsgemäßer Lack eingesetzt wird, sowie die Verwendung erfindungsgemäßer wäßriger Dispersionen zur Herstellung von Pigmentpasten und wäßrigen Lacken. Als Bindemittelkomponente des Lackes sind alle gängigen Systeme einsetzbar; Beispiele hierfür finden sich z.B. in den Literaturstellen EP 0074634 und EP 0505445. Im einzelnen wird vorteilhafterweise ein Gewichtsverhältnis Feststoffgehalt der erfindungsgemäßen Dispersion zu Feststoffgehalt des Tauchlackbindemittels des Gesamt-systems im Bereich von bis zu 50%. vorzugsweise von bis zu 30%, höchstvorzugsweise von bis zu 20%,. eingestellt.

Die erfindungsgemäßen Dispersionen werden vorzugsweise über ein Pastenharz, beispielsweise eine Pigmentpaste, in den Elektro- tauchlack eingeführt. Sie können bevorzugt vor, während und/oder nach dem Mahlprozeß zur Pigmentpaste gegeben werden, können grundsätzlich aber auch als alleiniges Anreibeharz eingesetzt werden. Ebenso ist eine Einführung über die Bindemitteldispersion des Lackes möglich.

Die Viskosität der Dispersion kann beliebig gewählt werden. Sie liegt z.B. bei 23°C und 50 bis 60 Gew.-% Festkörpergehalt im Bereich von über 5000 mPas. In der Regel können die Viskositäten bis zu 10000 mPas betragen. Die polymerisierten ethylenisch ungesättigten Monomere weisen typischerweise (aber nicht zwingend) ein massenmittleres Molekulargewicht von mehr als 100000 auf. Im einzelnen weisen die dabei erhaltenen Polymerpartikel vorteilhafterweise eine Größe von bis zu 20 µm, vorzugsweise bis 10 µm; auf. Zur Einstellung dieser Verhältnisse ist es hilfreich, wenn der Feststoffgehalt der Epoxid-Aminaddukt-Lösung bzw. -Dispersion im Bereich von 45 bis 60% liegt und die Temperatur bei der Polymerisation der Monomere im Bereich von 70°C bis 90°C liegt. Eine Vermessung der Teilchengröße kann z.B. mit Hilfe der Lichtmikroskopie erfolgen. Mit einer derartigen Größe von Polymerpartikein läßt sich einerseits die notwendige Dispersionskonsistenz erreichen, andererseits werden hierdurch die Eigenschaften der Tauchlackbeschichtung positiv beeinflußt. Eine befriedigend geringe Dichte des fertigen Überzuges wird erreicht, wenn das Gewichtsverhältnis des Feststoffgehalts der erfindnungsgemäßen Dispersion zum Feststoffgehalt des Tauchlackbindemittels des Gesamtsystems beispielsweise im Bereich von bis zu 50%, vorzugsweise im Bereich von bis zu 30%, höchstvorzugsweise bis zu 20% liegt. Zweckmäßig ist es, wenn das Epoxid-Aminaddukt in der Zusammensetzung strukturgleich oder strukturähnlich dem Bindemittel des Tauchlackes ist.

In einem erfindungsgemäßen Lack können zusätzlich auch anorganische und/oder organische Pigmente eingesetzt werden. Als anorganische Pigmente sind beispielsweise Titandioxid, Eisenoxid, Ruß, Aluminiumsilikat, Bariumsulfat, Aluminiumphosphormolybdat, Strontiumchromat, Bleisilikate oder Bleichromat zu nennen. Als organische Pigmente sind beispielhaft Azo-, Triphenylmethan-, Carbonyl- und Dioxazinpigmente zu erwähnen. Mit den Pigmentpartikeln wird auf übliche Weise eine "klassische" Pigmentpaste hergestellt, die mit einer erfindungsgemäßen Dispersion mischbar ist. Dann wird die erhaltene Mischung dem Tauchlackbindemittel in üblicher Weise zugegeben und dosiert. Ferner können in dem Lack die dem Fachmann bekannten Füllstoffe eingesetzt werden. Hierzu zählen u.a. silikatische Füllstoffe (z.B. Aluminiumsilikat, Talkum, Kieselerde, Eisenglimmer, Siliciumcarbid, Quarzmehl, Kieselgur), carbonatische Füllstoffe (z.B. Calciumcarbonat) und sulfatische Füllstoffe (z.B. Bariumsulfat, Calciumsulfat). Schließlich können übliche Lackhilfsmittel eingerichtet sein, z.B. Weichmacher und andere Lackadditive (z.B. Dispergierhilfen, Emulgatoren), Verdickungs- und Thixotropierungsmittel, Schaumverhinderungsmittel, Verlaufsmittel und andere Hilfen gegen Oberflächstörungen, Stabilisatoren und/oder UV-Absorber.

Eine erfindungsgemäße Dispersion kann weitere Additive wie z.B. Pigmente, Weichmacher, Füllstoffe oder Netzmittel enthalten. Sind Pigmente zugesetzt, so wird eine dem Lack farbgebende Dispersion erhalten. Sind demgegenüber keine Pigmente zugesetzt, so kann mit der Dispersion ein Klarlack hergestellt werden.

Ein Verfahren zur Herstellung einer erfindungsgemäßen Dispersion läßt sich in aller Allgemeinheit wie folgt beschreiben. Es werden 5 bis 30 Teile Epoxid-Aminaddukt, 20 bis 50 Teile Wasser und 0,1 bis 10 Teile eines Initiators gemischt. Ggf. können auch 1-10% üblicher organischer Lösemittel zugegeben werden. Insbesondere kann es sich dabei um bis zu 5-10% Ethanol handeln, was zu einer Siedekühlung des Reaktionsgemisches führt. Anschließend werden unter geringer Wärmezufuhr 20 bis 60 Teile ethylenisch ungesättigte Monomere, vorzugsweise Styrol, ggf.im Gemisch mit Lösemitteln, zudosiert. Die Temperatur erhöht sich dabei von anfänglichen 80°C im wesentlichen durch die freiwerdende Reaktionsenergie auf etwa 90°C. Bei den Initiatoren der Polymerisationsreaktion handelt es sich vorzugsweise um freie Radikale. Mit dem erfindungsgemäßen Verfahren läßt sich eine Dispersion bzw. Pigmentpaste mit den oben beschriebenen vorteilhaften Eigenschaften herstellen.

Im folgenden wird die Erfindung anhand von Beispielen zur Herstellung eines erfindungsgemäßen Elektrotauchlackes näher erläutert.

### Beispiel 1: Herstellung eines Vernetzungsmittels für einen Elektrotauchlack.

In einem Reaktor werden 10462 Teile Isomere und höherfunktionelle Oligomere auf Basis von 4,4'-Diphenylmethandiisocyanat mit einem NCO-Equivalentgewicht von 135 g/eq (Lupranat^{R} M20S der Fa. BASF AG; NCO-Funktionalität ca. 2,7; Gehalt an 2,2'- und 2,4'-Diphenylmethandiisocyanat unter 5%) unter Stickstoffatmosphäre vorgelegt. Man gibt 20 Teile Dibutylzinndilaurat zu und tropft 9626 Teile Butyldiglykol so zu, daß die Produkttemperatur unter 60 °C bleibt. Nach Ende der Zugabe wird die Temperatur weitere 60 Minuten bei 60 °C gehalten und ein NCO-Equivalentgewicht von 1120 g/eq bestimmt (bezogen auf Festanteile). Nach Anlösung in 7737 Teilen Methylisobutylketon und Zugabe von 24 Teilen Dibutylzinndilaurat werden 867 Teile geschmolzenes Trimethylolpropan so zugegeben, daß eine Produkttemperaturvon 100°C nicht überschritten wird. Nach Zugabeende läßt man weitere 60 Minuten-nachreagieren. Man kühlt auf 65 °C ab und verdünnt gleichzeitig mit 963 Teilen n-Butanol und 300 Teilen Methylisobutylketon. Der Feststoffgehalt liegt bei 70,1 % (1 Std. bei 130 °C).

### Beispiel 2: Herstellung eines Vorprodukts (AV1) der Aminkomponente für ein Elektrotauchlack-Bindemittel.

Aus einer 70%-igen Lösung von Diethylentriamin in Methylisobutylketon wird bei 110 bis 140 °C das Reaktionswasser entfernt. Anschließend wird mit Methylisobutylketon verdünnt bis die Lösung ein Aminequivalentgewicht von 131 g/eq aufweist.

### Beispiel 3: Herstellung einer wäßrigen Elektrotauchlack- Dispersion D, enthaltend ein Bindemittel des Standes der Technik und das Venetzungsmittel aus Beispiel 1.

In einem Reaktor werden 5797 Teile Epoxidharz auf Basis von Bisphenol A mit einem Epoxy-Equivalentgewicht (EEW) von 188 g/eq zusammen mit 1320 Teilen Bisphenol A, 316 Teilen Dodecylphenol, 391 Teilen p-Kresol und 413 Teilen Xylol unter Stickstoffatomsphäre auf 125 °C aufgeheizt und 10 Minuten gerührt. Anschließend heizt man auf 130 °C und gibt 22 Teile N,N-Dimethylbenzylamin zu. Bei dieser Temperatur wird der Reaktionsansatz gehalten, bis das EEW einen Wert von 814 g/eq erreicht hat.

Man gibt nun 7810 Teile des Vernetzungsmittel (V1) gemäß Beispiel 1 hinzu und hält bei 100 °C. Eine halbe Stunde nach Vernetzerzugabe werden 198 Teile Butylglykol und 1002 Teile sec-Butanol zugesetzt. Unmittelbar anschließend wird eine Mischung von 481 Teilen des Vorprodukts (AV1) gemäß Beispiel 2 und 490 Teilen Methylethanolamin in den Reaktor gegeben und der Ansatz auf 100 °C temperiert. Nach einer weiteren halben Stunde erhöht man die Temperatur auf 105 °C und gibt 150 Teile N,N-Dimethylaminopropylamin zu.

45 Minuten nach Aminzugabe setzt man 879 Teile Plastilit^{R} 3060 (Propylenglykolverbindung, Fa. BASF) und 45 Teile eines üblichen Additivs zu, verdünnt mit einem Gemisch von 490 Teilen Propylenglycolphenylether und 196 Teilen sec-Butanol, und kühlt auf 95 °C ab.

Nach 10 Minuten werden 14930 Teile des Reaktionsgemischs in ein Dispergiergefaß überführt. Dort gibt man unter Rühren 455 Teile Milchsäure (88 %-ig in Wasser), gelöst in 6993 Teilen Wasser zu. Anschließend wird 20 Minuten homogenisiert, bevor mit weiteren 12600 Teilen Wasser weiter verdünnt wird.

Durch Destillation im Vaku um werden die flüchtigen Lösemittel entfernt und anschließend mengengleich durch Wasser ersetzt.

Die Dispersion D besitzt folgende Kennzahlen:

| | |
|---|---|
| Feststoffgehalt | 31,9 % (1 Stunde bei 130 oC) |
| Basengehalt | 0,69 Milliequivalente/g Festkörper |
| Säuregehalt | 0,32 Milliequivalente/g Festkörper |
| pH | 6,2 |
| Teilchengröße | 113 nm |

### Beispiel 4: Herstellung einer erfindungsgemäßen Dispersion.

### Beispiel 4.1: Herstellung einer erfindungsgemäß verwendeten Epoxid-Aminaddukt-Lösung.

Gemäß EP 0 505 445 B1 , Beispiel 1.3, wird eine organischwäßrige Lösung eines Epoxid-Aminaddukts hergestellt, indem man in einer ersten Stufe 2598 Teile Bisphenol-A-diglycidylether (Epoxy-Equivalentgewicht (EEW): 188 g/eq), 787 Teile Bisphenol-A, 603 Teile Dodecylphenol und 206 Teile Butylglykol in Gegenwart von 4 Teilen Triphenylphosphin bei 130 °C bis zu einem EEW von 865 g/eq reagieren läßt. Während des Abkühlens wird mit 849 Teilen Butylglykol und 1534 Teilen D.E.R. 732 (Polypropylenglykoldiglycidylether der Fa. DOW Chemical) verdünnt und bei 90 °C mit 266 Teilen 2,2'-Aminoethoxyethanol und 212 Teilen N, N-Dimethylaminopropylamin weiterreagiert. Nach 2 Stunden ist die Viskosität der Harzlösung konstant (5,3 dPas; 40 %-ig in Solvenon^{R} PM (Methoxypropanol der Fa. BASF AG); Platte-Kegel-Viskosimeter bei 23 °C) Man verdünnt mit 1512 Teilen Butylglykol und teilneutralisiert die Basengruppen mit 201 Teilen Eisessig, verdünnt weiter mit 1228 Teilen entionisiertem Wasser und trägt aus. Man erhält so eine 60%ige wäßrig-organische Harzlösung, deren 10%-ige Verdünnung einen pH von 6,0 aufweist.

Die Epoxid-Aminaddukt-Lösung (kurz: Harzlösung) wird im folgenden zur Herstellung einer erfindungsgemäßen Dispersion eingesetzt.

### Beispiel 4.2: Herstellung der erfindungsgemäßen Dispersion.

In eine Edelstahlreaktionsgefäß werden 20791 Gewichtsteile des in 4.1 beschriebenen Epoxid-Amminaddukts sowie 35588 Teile VE-Wasser vorgelegt. Der Reaktorinhalt wird auf 80°C erhitzt und innerhalb einer Stunde werden 42767 Teile Styrol zugegeben. Dabei wird die Temperatur auf 80 °C gehalten. In einem separaten Gefäß werden 427 Teile Azoisovaleronitril mit 427 Teilen Toluol gemischt. Dies ergeben den Initiator, der dann dem Reaktionsgemisch nach und nach zudosiert werden kann. Vorzugsweise wird jedoch der Initiator gleich zu Anfang komplett und damit in einem hohen Überschuß zugegeben. 4 Stunden nach Styrolzugabe, meist weniger als 3 Stunden nach Styrolzugabe, ist die Reaktion beendet. Festkörper der erhaltenen Dispersion (60 min., 130°C): 55%, Viskosität 585 mPas.

### Beispiel 4.3:

In ein Edelstahlrektionsgefäß werden 18,873 Teile des Pastenreibharzes, sowie 37,532 Teile VE-Wasser und 5,0 Teile Ethanol vorgelegt. Der Reaktorinhalt wird auf 80° erhitzt; 0,383 Teile Initiator tert Butyl per 2-Ethylhexanoat zugegeben und innerhalb einer Stunde 38,411 Teile Styrol zugegeben. Dabei wird die Temperatur bei 90° C gehalten. 4 Stunden nach Styrolzugabe ist die Reaktion beendet.
Festkörper (60 min, 130° C):50%, Viskosität 280 mPas.

### Beispiel 5: Herstellung einer Pigmentpaste für einen erfindungsgemäßen Elektrotauchlack.

Es werden zunächst 280 Teile Wasser und 250 Teile der in Beispiel 4.1 beschriebenen Harzlösung vorgemischt. Dann werden 5 Teile Ruß, 67 Teile Extender ASP 200, 373 Teile Titandioxid (TI-PURE R900, DuPont) und 25 Teile Vernetzungskatalysator (DBTO) zugefügt und wird 30 Minuten lang unter einem schnellaufenden Dissolverrührwerk gemischt. Anschließend wird die Mischung in einer Labor-Rührwerksmühle während 1 bis 1,5 h bis zu einer Hegman-Feinheit von 12 dispergiert und mit weiterem Wasser ggfs. auf die gewünschte Verarbeitungsviskosität eingestellt.

### Beispiel 6. Herstellung erfindungsgemäßer Elektrotauchlacke.

Mit der Dispersion D (Beispiel 3), der Pigmentpaste (Beispiel 5) und der erfindungsgemäßen Dispersion (Beispiel 4.2) werden die folgenden Elektrotauchlackbäder hergestellt:

| | ETL1 | ETL2 | ETL3 |
|---|---|---|---|
| Dispersion D | 2373g | 2135g | 2017g |
| erf. Dispersion | --- | 150g | 220g |
| Pigmentpaste | 599g | 599g | 599g |
| VE-Wasser | 2028g | 2116g | 2164g |

Die so erhaltenen Elektrotauchlacke haben einen Festkörperanteil von ca. 20% mit einem Aschegehalt von 25%.

Nach Abscheidung bei 300-330 V bei einer Badtemperatur von 30 °C und Einbrennen (15 min. Objekttemperatur 175 °C) wurden auf nicht passivierend gespülten, phosphatierten Stahltafeln (BO 26 W 42 OC, Chemetall) glatte Filme mit einer Schichtdicke von 20-22 mm erhalten. Die Prüfergebnisse sind in folgender Tabelle aufgelistet.

| Mechanische Eigenschaften | ETL1 | ETL2 | ETL3 |
|---|---|---|---|
| Erichsen Tiefung (mm) DIN 53156 | 5,0 | 5,5 | 5,5 |
| Reverse impact (inch pound) ASTM D 2794 | 60 | 160 | 160 |
| Biegung kon. Dorn (cm) ASTM D 522 | 4,5 | 3,0 | 3,0 |
| MB-Kugelschuß bei -20°C (Abplatzung in mm²) MB-Spez. LPV 5200.40701 | 11 | 8 | 8 |

| Korrosion: | ETL1 | ETL2 | ETL3 |
|---|---|---|---|
| 10 Zykl. Klima-Wechseltest mit typ. Lackaufbau (VDA 621-415) Unterwanderung mm | 2,05 | 0,95 | 1,10 |
| Kantenrost (Note) | 2 | 2 | 0 |
| 15 Zykl. GM-SCAB-Test (GM-Spez. GME 60212) Unterwanderung mm | 1,5 | 1,1 | 1,0 |

Die Ergebnisse belegen, daß es zu keinerlei Enthaftungserscheinungen zu den nachfolgenden Lackschichten kommt.

## Patentansprüche

1. Wäßrige Dispersionen, die erhältlich sind, indem Styrol als ein ethylenisch ungesättigtes Monomer oder eine Mischung aus ethylenisch ungesättigten Monomeren, wobei die Mischung aus ethylenisch ungesättigten Monomeren mindestens 70 Gew.-% Styrol enthält, in einer wäßrigen Lösung eines wenigstens teilweise protonierten Epoxid-Aminaddukts polymerisiert wird,
**dadurch gekennzeichnet,**
**daß** das Epoxid-Aminaddukt erhältlich ist, indem
(A) ein Glydicylether eines Polyphenols, der im statistischen Mittel mindestens eine Epoxidgruppe im Molekül enthält, oder ein Gemisch aus solchen Glycidylethem,
(B) ein Polygycidylether eines Polyols, der im statistischen Mittel mehr als 1,0 Epoxidgruppen im Molekül enthält, oder ein Gemisch aus solchen Polyglycidylethem und
(C) eine Verbindung, die eine primäre Aminogruppe im Molekül enthält, oder ein Gemisch aus solchen Verbindungen
zu dem Epoxid-Aminaddukt umgesetzt werden, wobei die Komponenten (A) und (B) in einem Äquivalentverhältnis von 1,0 : 0,5 bis 1,0 : 8,0 eingesetzt werden und auf ein Äquivalent Epoxidgruppen aus (A) und (B) 0,3 bis 0,7 Mol der Komponente (C) eingesetzt werden.

2. Wäßrige Dispersionen nach Anspruch 1, **dadurch gekennzeichnet, daß** sie erhältlich sind, indem das ethylenisch ungesättigte Monomer bzw. die Mischung aus ethylenisch ungesättigten Monomeren und das wenigstens teilweise protonierte Epoxid-Aminaddukt in einem Gewichtsverhältnis von 9,0:1,0 bis 0,1:1,0 eingesetzt werden.

3. Wäßrige Dispersionen nach Anspruch 1 oder 2, **dadurch gekennzeichnet, daß** sie erhältlich sind, indem als Mischung aus ethylenisch ungesättigten Monomeren eine Mischung aus Styrol und mindestens einem weiteren, mit Styrol copolymerisierbaren ungesättigten Monomer eingesetzt wird.

4. Wäßrige Dispersionen nach einem der Ansprüche 1 bis 3, **dadurch gekennzeichnet, daß** sie erhältlich sind, indem das ethylenisch ungesättigte Monomer oder die Mischung aus ethylenisch ungesättigten Monomeren unter Verwendung eines wasserunlöslichen Initiators oder einer Mischung aus wasserunlöslichen Initiatoren radikalisch polymerisiert wird.

5. Wäßrige Dispersionen nach Anspruch 4, **dadurch gekennzeichnet, daß** sie erhältlich sind, indem der wasserunlösliche Initiator bzw, die Mischung aus wasserunlöslichen Initiatoren in einer Menge von 0,1 bis 10,0 Gew.-%, bezogen auf die Menge an eingesetztem ethylenisch ungesättigtem Monmer bzw. auf die Menge an eingesetzter Mischung aus ethylenisch ungesättigten Monomeren, eingesetzt wird.

6. Wäßrige Dispersion nach Anspruch 5, **dadurch gekennzeichnet, daß** sie erhältlich sind, indem mindestens 50 Gew.-% der insgesamt eingesetzten Menge an Initiator vorgelegt werden und die Zugabe des ethylenisch ungesättigten Monomeren bzw. die Zugabe der Mischung aus ethylenisch ungesättigter Monomeren innerhalb von höchstens 3 Stunden erfolgt.

7. Verfahren zur Herstellung einer wäßrigen Dispersion nach einem der Ansprüche 1 bis 6, **dadurch gekennzeichnet, daß** das ethylenisch ungesättigte Monomer oder die Mischung aus ethylenisch ungesättigten Monomeren in der wäßrigen Lösung des wenigstens teilweise protonierten Epoxid-Aminaddukts polymerisiert wird, wobei das wenigstens teilweise protonierte Epoxid-Aminaddukt erhalten wird, indem (A) ein Glycidylether eines Polyphenols, der im statistischen Mittel mindestens eine Epoxidgruppe im Molekül enthält, oder ein Gemisch aus solchen Glycidylethern, (B) ein Polygycidylether eines Polyols, der im statistischen Mittel mehr als 1,0 Epoxidgruppen im Molekül enthält, oder ein Gemisch aus solchen Polyglycidylethem und (C) eine Verbindung, die eine primäre Aminogruppe im Molekül enthält, oder ein Gemisch aus solchen Verbindungen zu dem Epoxid-Aminaddukt umgesetzt werden, wobei die Komponenten (A) und (B) in einem Äquivalentverhältnis von 1,0 : 0,5 bis 1,0 : 8,0 eingesetzt werden und auf ein Äquivalent Epoxidgruppen aus (A) und (B) 0,3 bis 0,7 Mol der Komponente (C) eingesetzt werden.

8. Wäßriger Lack, **dadurch gekennzeichnet daß** er eine wäßrige Dispersion nach einem der Ansprüche 1 bis 6 enthält.

9. Verfahren zum Beschichten elektrisch leitfähiger Substrate, **dadurch gekennzeichnet, daß** ein Lack nach Anspruch 8 eingesetzt wird.

10. Verwendung einer wäßrigen Dispersion nach einem der Ansprüche 1 bis 6 zur Herstellung von Pigmentpasten und wäßrigen Lacken.

## Claims

1. Aqueous dispersions which are obtainable by polymerizing styrene as an ethylenically unsaturated monomer or a mixture of ethylenically unsaturated monomers, where the mixture of ethylenically unsaturated monomers contains at least 70% by weight of styrene, in an aqueous solution of an at least partially protonated epoxide-amine adduct,
**characterized**
**in that** the epoxide-amine adduct is obtainable by reacting
(A) a glycidyl ether of a polyphenol that contains on statistical average at least one epoxide group in the molecule, or a mixture of such glycidyl ethers,
(B) a polyglycidyl ether of a polyol that contains on statistical average more than 1.0 epoxide groups in the molecule, or a mixture of such polyglycidyl ethers, and
(C) a compound that contains a primary amino group in the molecule, or a mixture of such compounds
to give the epoxide-amine adduct, components (A) and (B) being employed in a ratio of equivalents of from 1.0:0.5 to 1.0:8.0 and from 0.3 to 0.7 mol of component (C) being employed per equivalent of epoxide groups of (A) and (B).

2. Aqueous dispersions according to claim 1, **characterized in that** they are obtainable by employing the ethylenically unsaturated monomer or the mixture of ethylenically unsaturated monomers and the at least partially protonated epoxide-amine adduct in a weight ratio of from 9.0:1.0 to 0.1:1.0.

3. Aqueous dispersions according to claim 1 or 2, **characterized in that** they are obtainable by employing, as a mixture of ethylenically unsaturated monomers, a mixture of styrene and at least one other, unsaturated monomer which is copolymerizable with styrene.

4. Aqueous dispersions according to one of claims 1 to 3, **characterized in that** they are obtainable by free-radically polymerizing the ethylenically unsaturated monomer or the mixture of ethylenically unsaturated monomers using a water-insoluble initiator or a mixture of water-insoluble initiators.

5. Aqueous dispersions according to claim 4, **characterized in that** they are obtainable by employing the water-insoluble initiator or the mixture of water-insoluble initiators in an amount of from 0.1 to 10.0% by weight, based on the amount of ethylenically unsaturated monomer employed or on the amount of mixture of ethylenically unsaturated monomers employed.

6. Aqueous dispersions according to claim 5, **characterized in that** they are obtainable by initially introducing at least 50% by weight of the overall amount of initiator employed and adding the ethylenically unsaturated monomer or adding the mixture of ethylenically unsaturated monomers over the course of not more than 3 hours.

7. Process for preparing an aqueous dispersion according to one of claims 1 to 6, **characterized in that** the ethylenically unsaturated monomer or the mixture of ethylenically unsaturated monomers is polymerized in the aqueous solution of the at least partially protonated epoxide-amine adduct, the at least partially protonated epoxide-amine adduct being obtained by reacting (A) a glycidyl ether of a polyphenol that contains on statistical average at least one epoxide group in the molecule, or a mixture of such glycidyl ethers, (B) a polyglycidyl ether of a polyol that contains on statistical average more than 1.0 epoxide group in the molecule, or a mixture of such polyglycidyl ethers and (C) a compound that contains a primary amino group in the molecule, or a mixture of such compounds, to give the epoxide-amine adduct, components (A) and (B) being employed in a ratio of equivalents of from 1.0:0.5 to 1.0:8.0 and from 0.3 to 0.7 mol of component (C) being employed per equivalent of epoxide groups of (A) and (B).

8. Aqueous coating material, **characterized in that** it comprises an aqueous dispersion according to one of claims 1 to 6.

9. Process for coating electrically conductive substrates, **characterized in that** a coating material according to claim 8 is employed.

10. Use of an aqueous dispersion according to one of claims 1 to 6 for preparing pigment pastes and aqueous coating materials.

## Revendications

1. Dispersions aqueuses que l'on peut obtenir par polymérisation de styrène en tant que monomère éthyléniquement insaturé, ou que mélange de monomères éthyléniquement insaturés, le mélange de monomères éthyléniquement insaturés contenant au moins 70% en poids de styrène, dans une solution aqueuse d'un produit d'addition d'époxyde-amine au moins partiellement protoné, **caractérisées en ce que** le produit d'addition d'époxyde-amine peut être obtenu par réaction
(A) d'un éther glycidylique d'un polyphénol contenant en moyenne statistique au moins un groupe époxyde dans sa molécule, ou d'un mélange de tels éthers glycidyliques,
(B) d'un éther polyglycidylique d'un polyol contenant en moyenne statistique plus de 1,0 groupe époxyde dans sa molécule, ou d'un mélange de tels éthers polyglycidyliques, et
(C) d'un composé contenant un groupe amino primaire dans sa molécule, ou d'un mélange de tels composés,
pour former le produit d'addition d'époxyde-amine, les composants (A) et (B) étant mis en oeuvre en une proportion d'équivalents de 1,0:0,5 à 1,0:8:0 et en utilisant de 0,3 à 0,7 mole de composant (C) par équivalent de groupes époxyde de (A) et (B).

2. Dispersions aqueuses selon la revendication 1, **caractérisées en ce qu'**elles peuvent être obtenues **en ce que** l'on met en oeuvre le monomère éthyléniquement insaturé ou le mélange de monomères éthyléniquement insaturés et le produit d'addition d'époxyde-amine au moins partiellement protoné en une proportion pondérale de 9,0:1,0 à 0,1:1,0;

3. Dispersions aqueuses selon la revendication 1 ou 2, **caractérisées en ce qu'**elles peuvent être obtenues **en ce que** l'on met en oeuvre comme mélange de monomères éthyléniquement insaturés un mélange de styrène et d'au moins un autre monomère insaturé copolymérisable avec le styrène.

4. Dispersions aqueuses selon l'une des revendications 1 à 3, **caractérisées en ce qu'**elles peuvent être obtenues par polymérisation radicalaire du monomère éthyléniquement insaturé ou du mélange de monomères éthyléniquement insaturés en utilisant un amorceur insoluble dans l'eau ou un mélange d'amorceurs insolubles dans l'eau.

5. Dispersions aqueuses selon la revendication 4, **caractérisées en ce qu'**elles peuvent être obtenues par mise en oeuvre de l'amorceur insoluble dans l'eau ou du mélange d'amorceurs insolubles dans l'eau en une quantité de 0,1 à 10,0% en poids, par rapport à la quantité de monomère éthyléniquement insaturé mise en oeuvre ou à la quantité de mélange de monomères éthyléniquement insaturés mise en oeuvre.

6. Dispersion aqueuse selon la revendication 5, **caractérisée en ce qu'**elle peut être obtenue **en ce que** l'on charge au moins 50% en poids de la quantité totale d'amorceur mise en oeuvre et que l'addition du monomère éthyléniquement insaturé ou l'addition du mélange de monomères éthyléniquement insaturés est entreprise en l'espace d'un maximum de 3 heures.

7. Procédé de préparation d'une dispersion aqueuse selon l'une des revendications 1 à 6, **caractérisé en ce que** l'on polymérise le monomère éthyléniquement insaturé ou le mélange de monomères éthyléniquement insaturés dans la solution aqueuse du produit d'addition d'époxyde-amine au moins partiellement protoné, le produit d'addition d'époxyde-amine au moins partiellement protoné étant obtenu par réaction (A) d'un éther glycidylique d'un polyphénol contenant en moyenne statistique au moins un groupe époxyde dans sa molécule, ou d'un mélange de tels éthers glycidyliques, (B) d'un éther polyglycidylique d'un polyol contenant en moyenne statistique plus de 1,0 groupe époxyde dans sa molécule, ou d'un mélange de tels éthers polyglycidyliques, et (C) d'un composé contenant un groupe amino primaire dans sa molécule, ou d'un mélange de tels composés, pour former le produit d'addition d'époxyde-amine, les composants (A) et (B) étant mis en oeuvre en une proportion d'équivalents de 1,0:0,5 à 1,0:8:0 et en utilisant de 0,3 à 0,7 mole de composant (C) par équivalent de groupes époxyde de (A) et (B).

8. Vernis à base aqueuse, **caractérisé en ce qu'**il contient une dispersion aqueuse selon l'une des revendications 1 à 6.

9. Procédé de revêtement de substrats électriquement conducteurs, **caractérisé en ce que** l'on met en oeuvre un vernis selon la revendication 8.

10. Utilisation d'une dispersion aqueuse selon l'une des revendications 1 à 6 pour la préparation de pâtes pigmentaires et de vernis à base aqueuse.
